(19) Europäisches Patentamt
European Patent Office
Office européen des brevets

(11) Numéro de publication: **0 153 261**
**B1**

(12) # FASCICULE DE BREVET EUROPÉEN

(45) Date de publication du fascicule du brevet: **25.01.89**

(51) Int. Cl.⁴: **C 07 F 9/40**, C 07 F 9/38

(21) Numéro de dépôt: **85420029.2**

(22) Date de dépôt: **21.02.85**

(54) **Esters de la famille de la N-phosphonométhylglycine et leur utilisation pour la préparation d'herbicides connus.**

(30) Priorité: **23.02.84 FR 8402988**

(43) Date de publication de la demande: **28.08.85 Bulletin 85/35**

(45) Mention de la délivrance du brevet: **25.01.89 Bulletin 89/4**

(84) Etats contractants désignés: **AT BE CH DE FR GB IT LI LU NL SE**

(56) Documents cité:
**EP-A-0 055 695**
**FR-A-2 193 830**
**US-A-4 065 491**

**SYNTHESIS, INTERNATIONAL JOURNAL OF METHODS IN SYNTHETIC ORGANIC CHEMISTRY no. 4, avril 1977, pages 239-240; J. LUKSZO et al.: "New protective groups in the synthesis of 1-amino-alkanephosphonic acids and esters"**

(73) Titulaire: **RHONE- POULENC AGROCHIMIE, 14- 20, rue Pierre Baizet, F-69009 Lyon (FR)**

(72) Inventeur: **Lacroix, Guy, 332 F Balmont - La Duchère, F-69009 Lyon (FR)**

(74) Mandataire: **Brachotte, Charles, RHONE- POULENC AGROCHIMIE BP 9163- 09, F-69263 Lyon Cedex 1 (FR)**

EP 0 153 261 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne un procedé de préparation d'esters phosphoniques N-substitués de la famille de la N-phosphonométhyl glycine utilisables pour la synthèse d'herbicides connus.

On connaît de nombreux herbicides de la famille des N-phosphonométhyl glycine (brevets US 3 455 675, 4 388 103, et 4 397 676, français 2 129 327, européens 53 871, 54 382, 73 574, PCT n° WO83/03 608), anglais 2 090 596, belges 894 244, 894 245, 894 590, 894 591, 894 592, 894 593, 894 594, 894 595.

Un but de l'invention est de fournir un procédé très simple et amélioré de préparation d'herbicides connus et mettant en oeuvre des réactifs peu élaborés, notamment la glycine et ses derivés simples.

D'autres buts et avantages de l'invention apparaitront au cours de la description qui va suivre.

On a déjà mentionné (brevet français 2 129 327) la formation de triesters de la N-phosphonométhyl glycine par réaction de glycinate d'éthyle avec du formaldéhyde et du diéthylphosphite. Ce procédé n'est pas satisfaisant car on estime qu'il s'oriente trop vers la formation de N,N-bis(phosphonométhyl)glycine. C'est pourquoi on a proposé (brevet français 2 193 830) de préparer la N-phosphonométhyl glycine par réaction d'une N-arylalkyl glycine avec du formaldéhyde et de l'acide phosphoreux avec élimination subséquente du groupe N-arylalkyle par action d'acide bromhydrique ou iodhydrique. Mais ce procédé n'est pas non plus estimé satisfaisant en raison des bas rendements obtenus et en raison de la formation de bromure de benzyle lacrimogène. On a alors proposé EP-A-55 695 de préparer la N-phosphonométhyl glycine par réaction de glycine N-substituée avec du formaldéhyde et de l'acide phosphoreux puis d'hydrogénolyser la N-phosphonométhyl glycine (N,N-disubstituée) obtenue. Ce procédé est éffectué en milieu acide concentré et a l'inconvénient d'être long et de se pratiquer avec une grande dilution des réactifs. Aussi plus récemment (brevet européen 81 459) on s'est orienté vers d'autres réactifs que la glycine et le formaldéhyde et on a fait réagir l'acide aminométhylphosphonique avec du glyoxal en présence de $SO_2$.

Il a maintenant été trouvé et c'est ce qui fait l'objet de la présente invention qu'on pouvait accèder aux herbicides de la famille de la N-phosphonométhyl glycine grâce à de nouveaux produits intermédiaires, qui sont eux-mêmes accessibles à partir de dérivés de glycine N-substituée et de formaldéhyde.

Plus précisément, l'invention concerne un procédé de préparation de diesters phosphoniques de formule:

```
        OR¹          R
        |            |
    O = P - CH2 - N - CH2 - CO - OH        (I)
        |
        OR¹
```

dans laquelle:

R est un groupement hydrogenolysable choisi parmi les radicaux, benzyle, 1-phényléthyle, 1-phénylpropyle, naphthylméthyle, 1-naphthyléthyle, 1-naphthylpropyle, diphénylméthyle, trityle (= triphénylméthyle).

$R_1$ est un radical alkyle ou phényle éventuellement substitué par des atomes d'halogène ou des groupes phényle, cyano, alkoxy, alkoxycarbonyle, $R_1$ ayant au plus 12 atomes de carbone.

Le procédé de préparation des composés de formule (I) s'effectue par réaction de phosphite (ou ester phosphonique) de formule:

```
        O - R¹
        |
    O = P - H                  (III)
        |
        O - R¹
```

dans laquelle $R^1$ est tel que défini précédemment, avec du formaldéhyde et un dérivé N-substitué de la glycine, le substituant sur l'atome d'azote étant un substituant hydrogénolysable; ce dérivé N-substitué de la glycine est en pratique un composé de formule R - NH-$CH_2$ - CO - OH.

La réaction s'effectue généralement entre 0 et 100°C, de préference entre 10 et 90°C par simple mélange de réactifs. Bien qu'un large excès (3/1 à 1/3 en rapports molaires) de l'un des réactifs par rapport à un autre soit possible, il est plus avantageux en pratique de se rapprocher le plus possible de la stoechiométrie et de ne pas s'écarter de plus de 20 % en mole de cette stoechiométrie. C'est même un des avantages important de l'invention de ne pas nécessiter d'excès d'un des réactifs par rapport aux autres. Un autre avantage de l'invention réside dans les bons rendements obtenus dans la préparation des composés selon l'invention.

Le formaldéhyde est utilisé sous l'une ou l'autre forme commodément accessible. Selon une modalité la plus courante il est utilisé sous forme de solution aqueuse de concentration comprise entre 1 % et la saturation, de préférence de 30 à 40 %.

La réaction peut être effectuée en présence d'un solvant inerte; quelque fois un tel solvant est inutile mais le milieu réactionnel contient habituellement de l'eau notamment en raison de l'utilisation de formaldéhyde en solution aqueuse.

Le produit de réaction est isolé par tout moyen connu en soi.

Les produits de formule (I) peuvent être transformés en produits herbicides connus de formule:

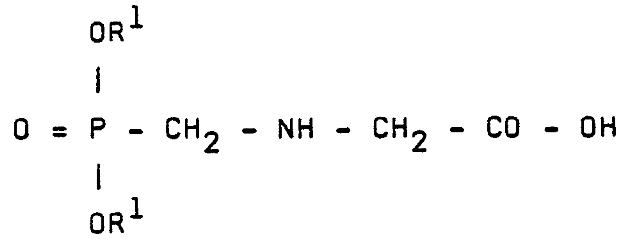

(IV)

par simple hydrogénolyse du groupement R. C'est le plus couramment une débenzylation. Cette débenzylation est mise en oeuvre avantageusement en milieu aqueux ou alcoolique à température ambiante ou supérieure et à pression supérieure ou égale à la pression atmosphérique. Les catalyseurs usuels d'hydrogénolyse des radicaux R en question peuvent être utilisés comme catalyseur. Des catalyseurs convenables sont le palladium, le platine et le nickel Raney. Ce catalyseur peut être employé avec ou sans support inerte. On peut aussi employer les métaux sus-mentionnés, en particulier le palladium et le platine, sous forme de sels, hydroxydes ou oxydes qui sont convertis en le métal correspondant sous l'action de l'hydrogène. Les catalyseurs à base de palladium, tels que le palladium sur charbon actif ou le palladium sur sulfate de baryum ou l'hydroxyde de palladium sur charbon actif, sont employés comme catalyseurs préférés de débenzylation. A la fin de la réaction, le catalyseur peut être séparé par filtration et le filtrat évaporé; ceci fournit le produit de formule (IV) à l'état pratiquement pur. Un avantage important de l'invention réside dans le fait que le temps de réaction pour cette débenzylation est relativement court, ce qui rend possible l'usage de quantités réduites de catalyseur.

Quand on désire préparer des formes connues non estérifiées d'herbicides, telles que le N-phosphonométhylglycine elle-même, le produit de formule (IV ) peut être hydrolysé complètement ou partiellement, de manière connue, par exemple par chauffage avec une solution d'un agent acide ou alcalin, en particulier un hydroxyde ou carbonate de métal alcalin ou alcalino-terreux, ou un acide chlorhydrique, sulfurique, phosphonique, perchlorique ou arylsulfonique. Cette hydrolyse peut aussi s'accompagner d'une salification ou d'une conversion en d'autres dérivés herbicides. Ainsi l'hydrogénolyse selon l'invention peut donc être suivie d'une hydrolyse et/ou d'une salification.

Les exemples suivants, donnés à titre non limitatif illustrent l'invention et montrent comment elle peut être mise en pratique.

**Exemple 1:**

On mélange 39 g de N-benzylglycine, 80 ml d'eau, 20,3 ml de solution aqueuse de formaldéhyde (0,248 mole) On verse goutte à goutte à température ambiante 58 g (0,248 mole) de diphénylphosphite $(C_6H_5O)_2PH(O)$. Au bout de 30 mn, on laisse la température s'élever à 30°C et on agite encore une heure. On filtre, lave à l'eau, sèche. Après recristallisation dans un mélange éther d'isopropyle/isopropanol en proportion volumiques 10/1, on obtient 57,4 g de poudre blanche fondant à 91°C (rendement 59,1 %) et constitué du produit de formule:

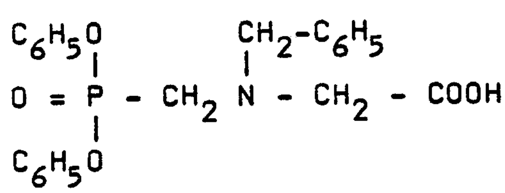

(V)

**Exemple 2:**

On mélange 16,5 g de N-benzylglycine, 28 ml d'eau, 13,8 g de diéthylphosphite $(C_2H_5O)_2PH$ (O). On coule à 20°C 9 ml de solution aqueuse à 37 % de formol (0,11 mole). On n'observe aucune exothermicité. On chauffe 5 h à 50°C. On refroidit et ajoute 40 ml de $CH_2Cl_2$. La phase organique est séparée et on ajoute 40 ml d'eau puis 100 ml de solution aqueuse de NaOH N. La phase aqueuse est décantée, extraite par $CH_2Cl_2$, acidifiée. La phase organique est sèchée et évaporée. On obtient 23,5 g (rendement 74 %) de produit de formule.

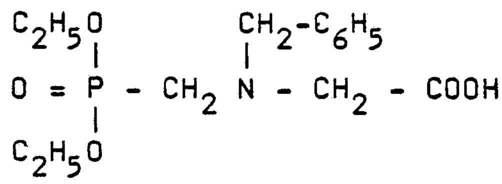

(VI)

**Exemple 3:**

On opère une saponification in situ de N-benzylglycinate d'éthyle. On mélange 0,5 l de solution aqueuse de NaOH à 30 % (5 moles) et 1l d'eau; dans cette solution, on verse progressivement en une heure 965 g de N-benzylglycinate d'éthyle. La température s'élève à 45°C. On élimine l'éthanol par distillation, refroidit et ajoute 0,82 l de solution aqueuse d'acide chlorydrique 6 N. La N-benzylglycine précipite. On ajoute 690 g de diéthylphosphite et 0,45 l de formol aqueux à 37 % (5 mole). On chauffe 5 h 30 à 50°C. On opère ensuite comme à l'exemple 2. On obtient 1116 g (rendement 71 % ) de produit de formule (VI).

**Revendications**

1. Procédé de préparation de diesters phosphoniques de formule

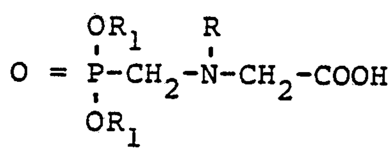

dans laquelle:
R est un groupement hydrogenolysable choisi parmi les radicaux, benzyle, 1-phényléthyle, 1-phénylpropyle, naphthylméthyle, 1-naphthyléthyle, 1-naphthylpropyle, diphénylméthyle, trityle (= triphénylméthyle).
$R_1$ est un radical alkyle ou phényle éventuellement substitué par des atomes d'halogène ou des groupes phényle, cyano, alkoxy, alkoxycarbonyle, $R_1$ ayant au plus 12 atomes de carbone.
Le dit procédé étant caractérisé en ce qu'on fait réagir un ester phosphonique de formule $(R^1O)_2$ P(O)H avec du formaldéhyde et un composé de formule R-NH-$CH_2$-COOH, R, et $R^1$ ayant les significations déja indiquées.

2. Procédé selon la revendication 1 caractérisé en ce que R est le radical benzyle.

3. Procédé selon la revendication 1 caractérisé en ce que $R^1$ est un radical alkyle ayant de 1 à 6 atomes de carbone, ou le radical phényle.

4. Procédé selon l'une des revendications 1 à 3 caractérisé en ce que la réaction s'effectue entre 0 et 100°C, chaque réactif étant en proportion ne s'écartant pas de la stoechiométrie de plus de 20 %.

5. Procédé selon l'une des revendications 1 à 4 caractérisé en ce que la réaction s'effectue en milieu aqueux.

6. Procédé de préparation de composés de formule

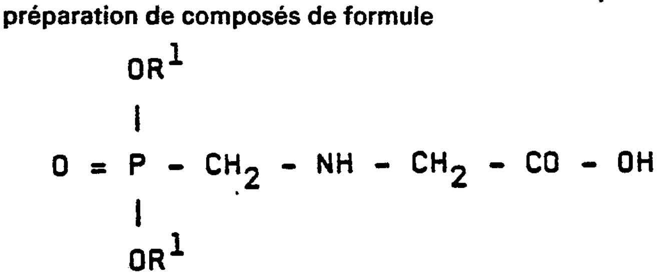

(IV)

dans laquelle $R^1$ a la signification donnée dans la revendication 1, caractérisé en ce qu'on hydrogenolyse un produit préparé selon l'une des revendications 1 à 5.

7. Procédé selon la revendication 6 caractérisé en ce qu'il est suivi d'une hydrolyse et/ou d'une salification.

**Patentansprüche**

1. Verfahren zur Herstellung von Phosphonsäurediestern der Formel

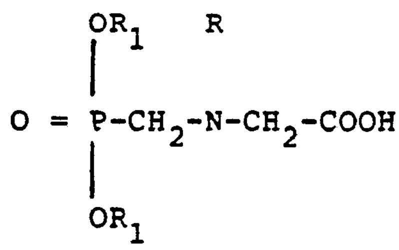

worin

R eine durch Wasserstoff abspaltbare Gruppe ist, ausgewählt unter den Resten

Benzyl, 1-Phenylethyl, 1-Phenylpropyl, Naphthylmethyl, 1-Naphthylethyl, 1-Naphthylpropyl, Diphenylmethyl, Trityl (= Triphenylmethyl);

$R_1$ ein Alkyl- oder Phenylrest ist, gegebenenfalls durch Halogenatome oder Phenyl-, Cyano-, Alkoxy-; Alkoxylcarbonylgruppen substituiert, wobei $R_1$ höchstens 12 Kohlenstoffatome aufweist;

welches Verfahren dadurch gekennzeichnet ist, daß man einen Phosphonsäureester der Formel $(R_1O)_2P(O)H$ mit Formaldehyd und einer Verbindung der Formel $R\text{-}NH\text{-}CH_2\text{-}COOH$, redgieren läßt, wobei R und $R_1$ die bereits angegebenen Bedeutungen haben.

2. Verfahren nach Anspruch 1,
dadurch gekennzeichnet, daß R ein Benzylrest ist.

3. Verfahren nach Anspruch 1,
dadurch gekennzeichnet, daß $R_1$ ein Alkylrest mit 1 bis 6 Kohlenstoffatomen oder ein Phenylrest ist.

4. Verfahren nach einem der Ansprüche 1 bis 3,
dadurch gekennzeichnet, daß die Reaktion zwischen 0 und 100°C durchgeführt wird, wobei jedes Reagenz in Proportionen vorliegt, die nicht mehr als 20 % von der Stöchiometrie abweichen.

5. Verfahren nach einem der Ansprüche 1 bis 4,
dadurch gekennzeichnet, daß die Reaktion in wäßrigem Millieu durchgeführt wird.

6. Verfahren zur Herstellung von Verbindungen der Formel

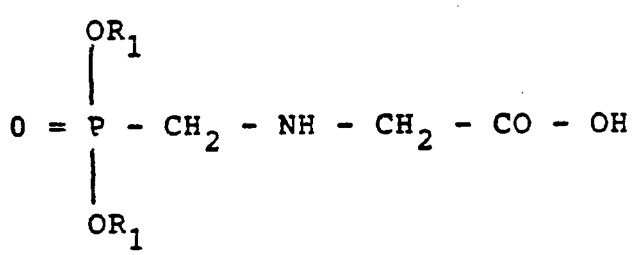

(IV)

worin $R_1$ die in Anspruch 1 angegebene Bedeutung hat,
dadurch gekennzeichnet, daß man ein nach einem der Ansprüche 1 bis 5 hergestelltes Produkt hydriert.

7. Verfahren nach Anspruch 6,
dadurch gekennzeichnet, daß man anschließend eine Hydrolyse und/oder Salzbildung vornimmt.

## Claims

1. Process for the preparation of phosphonic acid diester having the formula:

$$\begin{array}{ccccccccccc} & & OR_1 & & & & R & & & & \\ & & | & & & & | & & & & \\ O & = & P & - & CH_2 & - & N & - & CH_2 & - & COOH \\ & & | & & & & & & & & \\ & & OR_1 & & & & & & & & \end{array} \qquad (I)$$

in which R represent a hydrogenolysable group, selected from the benzyl, 1-phenylethyl, 1-phenylpropyl, naphthylmethyl, 1-naphtylethyl, 1-naphthylpropyl, diphenylmethyl, trityl(= triphenylmethyl),

$R_1$ represent an alkyl or phenyl radical optionnally substituted by halogen atoms or phenyl, cyano, alkoxy , alkoxycarbonyl groups, $R_1$ having at most 12 carbon atoms, said process being characterized in that a phosphonic acid of the formula $(R^1O)_2$, P(O)H is reacted with formaldehyde and a compound of the formula R-NH-$CH_2$-COOH, R and $R_1$ having the meanings given above.

2. Process according to claim 1, in which R is the benzyl radical.

3. Process according to claim 1, in which $R_1$ is an alkyl radical having from 1 to 6 carbon atoms or is the phenyl radical.

4. Process according to any one of claims 1 to 3, wherein the reaction is carried out between 0 and 100°C, each reactant being present in a proportion which does not differ by more than 20 % from stoichiometry.

5. Process according to any one of claims 1 to 4, wherein the reaction is carried out in an aqueous medium.

6. Process for the preparation of compounds of the formula:

$$\begin{array}{ccccccccccccc} & & OR_1 & & & & & & & & & & \\ & & | & & & & & & & & & & \\ O & = & P & - & CH_2 & - & NH & - & CH_2 & - & CO & - & OH \\ & & | & & & & & & & & & & \\ & & OR_1 & & & & & & & & & & \end{array} \qquad (IV)$$

wherein $R_1$ is as defined in claim 1 which comprises the hydrogenolysis of a compound of formule (I) prepared by a process according to any one of claims 1 to 5.

7. Process according to claim 6, wherein the said process is followed by a hydrolysis and/or a salt-forming reaction.